# EUROPEAN PATENT APPLICATION

(11) **EP 4 245 970 A1**
(43) Date of publication of application: **20.09.2023**
(21) Application number: 23155055.9
(22) Date of filing: 06.02.2023
(51) Int. Cl.: F01K 23/06, F22B 1/28

(54) **COMPRESSIBLE FLUID PLANT**

(30) Priority: 16.03.2022 IT 202200005132
(71) Applicant: Fratini, Roberto, 05018 Orvieto (TR) (IT)
(72) Inventor: Fratini, Roberto, 05018 Orvieto (TR) (IT)
(74) Representative: Lunati & Mazzoni S.r.L.

(57) **Abstract**

It is provided a compressible fluid plant (1) comprising an apparatus (2) configured to heat a compressible fluid, a turbine (4) in fluid passage connection with the apparatus (2), first electrical transformation means (5) operatively connected to the turbine (4), a current accumulator (6) operatively connected to the first electrical transformation means (5), a motor (3) in fluid passage connection with the apparatus (2) by means of a first conduit (23) suitable to convey the fluid exiting the apparatus (2) and entering the motor (3) and in fluid passage connection with the turbine (4) by means of a second conduit (34), a third conduit (42) for conveying fluid exiting the turbine (4) into the inlet of the apparatus (2), an electronic control unit (7) operatively connected to at least the apparatus (2), the motor (3) and the turbine (4), operatively connected to the accumulator (6) so as to allow transfer of electrical energy from the accumulator (6) to the control unit (7), wherein the accumulator (6) is further operatively connected to the apparatus (2) and configured to allow transfer of electrical energy from the accumulator (6) to the apparatus (2).

## Description

It is an object of the present invention to provide a compressible fluid plant of the type specified in the preamble to the first claim.

The subject matter of the present invention is a compressible fluid plant, for example steam or compressed air, which can be used in all applications requiring energy to power motive powers.

As is known, a compressible fluid plant may comprise a motor capable of transforming energy supplied by a fluid medium, which may be subjected to compression, into continuous mechanical energy or mechanical work. The energy can be supplied to the motor in the form of heat and/or pressure change of the fluid being supplied, depending on the type of motor under consideration. Two typical examples of compressible fluid are water vapour and compressed air, from which steam engines and compressed air engines are derived respectively.

By way of example, the transfer of energy in steam engines occurs through the transfer of steam heat, which is converted into mechanical energy. In fact, the steam is conveyed through special pipes into one or more cylinders containing pistons that run along the axis of the respective cylinders. The high temperature steam exerts pressure on the piston in the cylinder, which is then pushed, generating a translational movement. The steam in the chamber expands adiabatically, thus leading to an increase in volume and a decrease in temperature and pressure of the steam inside the cylinder. By means of a special valve system, it is possible to vent the steam fed into the chamber in the first phase and allow it to enter the part of the cylinder chamber on the opposite side of the piston, to make it translate in the opposite direction to that of the first phase.

The piston, driven by the expansion of the steam in the chamber, allows the translation generated to be exploited, or to be transformed into a rotary motion by means of a connecting rod-crank mechanism.

The steam feeding the engine can typically be produced by a boiler.

The mechanical work produced by such an engine can eventually be converted into electrical energy. For example, a compressible fluid engine can be coupled to an alternator.

An important disadvantage of the technologies just described is the energy losses that reduce the efficiency of the energy generation process. Consequently, these dispersions have an impact on the environment in terms of higher emissions of pollutant species.

In this situation, the technical task underlying the present invention is to devise a compressible fluid plant capable of substantially obviating at least part of the aforementioned drawbacks.

In the context of said technical task, it is an important aim of the invention to obtain a compressible fluid plant characterised by greater energy efficiency than conventional systems.

Another scope of the invention is the reduction of pollutant emissions.

Another task of the invention is to determine temperature-controlled emissions.

The specified technical task and purposes are achieved by a compressible fluid plant as claimed in the appended claim 1.

Preferred technical solutions are disclosed in the dependent claims.

The features and advantages of the invention are hereinafter clarified by the detailed description of preferred embodiments of the invention, with reference to the appended drawings, in which:

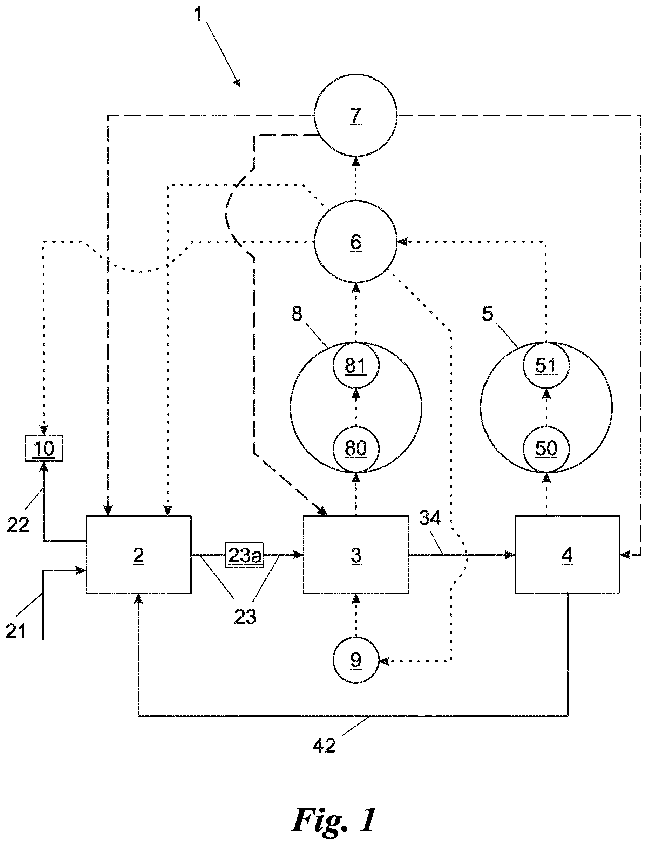

the **Fig. 1** illustrates a schematic diagram of the compressible fluid plant according to the invention in which the constituent elements of the system and their connections are shown and, therefore, the rectangular shaped figures represent the equipment within which the compressible fluid flows or which is in contact with it; the circular-shaped figures represent the equipment that only performs energy transformation or the processing of electronic signals; the solid arrows represent the conduits through which the compressible fluid flows; the dotted arrows represent electrical connections or energy transfers in the form of mechanical work; and the dashed arrows represent electronic connections.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the above-mentioned Figure, the compressible fluid plant according to the invention is globally referred to as number **1**.

The plant 1, as shown in Fig.1, comprises several apparatuses, some of which are powered by a compressible fluid, connected in such a way as to form a closed path. The plant 1 comprises an apparatus **2** configured to heat a compressible fluid. The function of the apparatus 2 is to provide thermal energy to the fluid so that it can be used in subsequent stages as an energy carrier.

The apparatus 1 comprises a turbine **4**. The turbine 4 is preferably in fluid passage connection with the apparatus 2. The turbine 4 is suitable for generating a first part of kinetic energy by interaction with the fluid. The turbine 4 is powered by the fluid, which acts as an energy carrier and flows through a fluid feed inlet. The fluid, once it enters turbine 4, for example, sets the blades of a rotor integral with a shaft rotating. In particular, the purpose of turbine 4 is to convert the energy transported by the fluid into kinetic energy, which can be converted into electrical energy by means of special transformation equipment.

In fact, the plant 1 comprises first electrical transformation means **5** operatively connected to the turbine 4. Preferably, the first transformation means 5 are configured to transform the first part of kinetic energy into electrical energy. In particular, the first transformation means 5 may comprise a first alternator **50** and a first transformer **51**.

The first alternator 50 and the first transformer 51 are operatively connected to each other. The first alternator 50 has the function of operating the actual transformation of kinetic energy into electrical energy and is therefore operatively connected to the turbine 4. The first transformer 51, on the other hand, permits regulation in voltage and intensity of the current output from the first alternator 50, to which it is operatively connected by means of an electrical connection.

The electric current produced by the first alternator 50 and suitably regulated by the first transformer 51 can be advantageously stored in a suitable apparatus.

For this purpose, the plant 1 comprises a current accumulator **6**. The accumulator 6 is preferably operatively connected to the first transformer means 5. Furthermore, as already mentioned, it is configured to store electrical energy. In fact, the accumulator 6 allows electrical energy to be stored in the form of chemical energy, which can be released when appropriate by means of oxidation-reduction reactions between special reagents.

Unlike conventional power generation plants, which typically comprise a fluid passage connection between a turbine and a fluid heating apparatus, The plant 1 comprises additional connections.

In fact, plant 1 comprises a motor **3**. The motor 3, similarly to turbine 4, is powered by the fluid and converts the energy carried by the incoming fluid into mechanical work that can be further utilised.

In particular, the fluid entering motor 3 comes from apparatus 2. In fact, the motor 3 is in fluid passage connection with the apparatus 2 by means of a first conduit **23** capable of conveying the fluid exiting the apparatus 2 and entering the motor 3.

The fluid leaving motor 3 is advantageously used in a subsequent energy transformation stage.

For this reason, the motor 3 is in fluid passage connection with the turbine 4 by means of a second conduit **34** suitable for conveying the fluid exiting the motor 3 to the turbine 4.

The fluid circuit through the equipment 2, 3 and 4 is closed by a last connection, placed downstream of the turbine 4.

Thus, the fluid exiting the turbine 4 is conveyed within a third conduit **42** which places the turbine 4 and the apparatus 2 in fluid passage connection and is capable of conveying the fluid exiting the turbine 4 to the inlet of the apparatus 2. In this way, the fluid exiting turbine 4, once reintroduced into apparatus 2, can be reheated, so as to repeat the cycle of energy transformations.

With this technical solution, it is therefore possible to minimise the energy losses occurring in the fluid transit between apparatus 2, 3 and 4. In this regard, plant 1 includes a solution that allows for better control of the individual energy transformation processes.

In detail, the installation 1 comprises an electronic control unit **7** operatively connected to at least the apparatus 2, the engine 3 and the turbine 4. Preferably, the control unit 7 is configured to control at least the apparatus 2, the engine 3 and the turbine 4. In addition, the control unit 7 is operatively connected to the accumulator 6, so as to enable the transfer of electrical energy from the accumulator 6 to the control unit 7. The control unit 7 therefore monitors and regulates the action of the different equipment, regulates the physical parameters of the fluid in the different stages of the cycle and the power supply of the different equipment comprising the plant 1. In addition, the power supply of control unit 7 is ensured by accumulator 6 to which it is operatively connected.

Similarly to what has been seen for the control unit 7, the energy stored in the accumulator 6 is advantageously exploited to power at least one other equipment of the plant 1 itself.

In fact, the accumulator 6 is further operatively connected to the apparatus 2 and configured to allow the transfer of electrical energy from the accumulator 6 to the apparatus 2. This causes apparatus 2 to be powered by the energy produced by apparatus 1 itself, allowing a net reduction in energy consumption.

With a view to reducing consumption and increasing the efficiency of apparatus 1, a more advantageous type of compressible fluid is used for the overall process.

Indeed, in the pant 1 the fluid preferably comprises steam or compressed air, the motor 3 is a steam or compressed air engine respectively, and the turbine 4 is a steam turbine or a compressed air turbine respectively. The use of a fluid such as water vapour or compressed air has the additional advantage of easy availability; moreover, these fluids have the further advantage of being advantageously non-polluting heat carriers.

In addition to those already described, the plant 1 has a further advantage in terms of reducing energy consumption.

In fact, plant 1 preferably comprises second electrical transformation means 8. The second transformation means 8 are operatively connected to the engine 3. Furthermore, they are configured to transform a second part of the kinetic energy developed by the engine 3 into electrical energy, the accumulator 6 being operatively also connected to the second transformation means 8 and configured to store the electrical energy.

Similarly, to the first transformation means 5, the second transformation means 8 may comprise a second alternator **80** and a second transformer **81**. The second alternator 80 and the second transformer 81 are operatively connected to each other.

The function of the second alternator 80 is to carry out the actual transformation of kinetic energy into electrical energy and it is therefore operatively connected to the engine 3. The second transformer 81, on the other hand, permits regulation of the voltage and intensity of the current output from the second alternator 80, to which it is operatively connected by means of an electrical connection. The second transformer 81 is operatively connected to the accumulator 6 similarly to what has already been described for the first transformer 5. With this technical solution, the energy consumption of the plant 1, which, as mentioned above, is lower than with conventional systems, can be further reduced.

As far as the operation of the plant 1 is concerned, further solutions are adopted. The plant 1 preferably comprises a starting unit **9** operatively connected to the motor 3. The unit 9 is preferably configured to start the motor 3. Furthermore, the unit 9 is operatively connected to the accumulator 6.

A further operational solution concerns the fluid flow in the equipment concerned.

Indeed, in the plant 1, the first conduit 23 preferably comprises a fluid-dynamic pump **23a** configured to pressure regulate the fluid inflow to the motor 3. This solution ensures that the fluid enters the motor 3 at the optimum pressure level for the subsequent transformation process.

Another solution concerns the energy storage system.

Specifically, in plant 1, accumulator 6 is preferably a lead-acid accumulator. This type of accumulator has the advantage of providing high power, suitable for mechanical equipment such as those included in the plant 1, and is suitable for continuous use. Finally, the invention preferably encompasses further solutions concerning equipment in which fluid transport takes place.

In the plant 1, the apparatus 2 is preferably a boiler. The advantage of using a boiler is that it is an efficient device in heat transfer, as well as being a reliable technology.

The apparatus 2 may further comprise an inlet **21** in fluid passage connection with an external fluid supply network. The inlet 21, if present, is configured to convey fluid to the inlet of the apparatus 2. Additionally, the apparatus 2 may also comprise an outlet **22** in fluid passage connection with an external environment to expel fluid.

The inlet 21 allows further fluid taken from an external network to be fed into the plant 1 if necessary, while the outlet 22 allows any excess fluid that may interfere with the smooth operation of the apparatus 1 to be conveyed to an external environment.

In relation to the latter described aspect, the plant 1 preferably comprises a cooling system **10**. The cooling system 10 is operatively connected to the accumulator 6, located downstream of the outlet 22, and comprises an evaporative cooler at least capable of lowering the temperature of the fluid expelled.

The use of the cooling system 10 results in a lowering of the temperature of the fluid exiting the apparatus 2. This arrangement reduces the temperature of the fluid exiting the plant 1 by reducing the possibility of perturbations in the temperature of the external environment. In other words, the cooling system 10 can allow heat emissions to the atmosphere to be minimised. The cooling system 10 is also supplied via the accumulator 6.

The invention thus substantially comprises a new use. In particular, the invention advantageously encompasses the use of a plant 1 for supplying power to driving machines.

The plant 1 according to the invention achieves important advantages.

In fact, as already anticipated, this invention allows for an improvement in energy efficiency, since it provides for different stages of reuse of the fluid used as a thermal vector, as well as the possibility of storing electrical energy which is in part immediately reused by some of the equipment of the plant 1. This system therefore allows for the transformation of energy with low dispersion compared to existing systems and the possibility of using it to power other equipment.

A consequence of the reduction in consumption is the reduction in polluting emissions, which makes this system more environmentally friendly.

In conclusion, any fluid emissions to the external environment are temperature regulated in such a way as to reduce the negative thermal impact with respect to the external environment.

The invention is susceptible to variations within the scope of the inventive concept as defined by the claims.

Within that scope, all details are substitutable by equivalent elements and the materials, shapes and dimensions can be any.

## Claims

1. Compressible fluid plant (1) comprising:
- an apparatus (2) configured to heat a compressible fluid,
- a turbine (4) in fluid passage connection with said apparatus (2) capable of generating kinetic energy through interaction with said fluid,
- first electrical transformation means (5) operatively connected to said turbine (4) and configured to transform at least a first part of said kinetic energy into electrical energy,
- a current accumulator (6) operatively connected to said first transformation means (5) and configured to store said electrical energy
and **characterised by** further comprising
- a motor (3) in connection with fluid passage with said apparatus (2) by means of a first conduit (23) suitable for conveying said fluid in exit from said apparatus (2) and in entrance to said motor (3) and in connection with fluid passage with said turbine (4) by means of a second conduit (34) suitable for conveying said fluid in exit from said motor (3) in entrance to said turbine (4),
- a third conduit (42) connecting said fluid passage with said turbine (4) and said apparatus (2) and conveying said fluid exiting said turbine (4) in entrance to said apparatus (2),
- an electronic control unit (7) operatively connected to at least said apparatus (2), said motor (3) and said turbine (4), configured to control at least said apparatus (2), said motor (3) and said turbine (4) and operatively connected to said accumulator (6) in such a way as to enable the transfer of said electrical energy from said accumulator (6) to said control unit (7),
and by the fact that
- said accumulator (6) is further operatively connected to said apparatus (2) and configured to allow the transfer of electrical energy from said accumulator (6) to said apparatus (2).

2. Plant (1) according to claim 1, wherein said fluid comprises water steam or compressed air, said motor (3) is a steam motor or compressed air motor respectively, and said turbine (4) is a steam turbine or compressed air turbine respectively.

3. Plant (1) according to any one of the preceding claims, comprising second electrical transformation means (8) operatively connected to said motor (3) and configured to transform a second part of said kinetic energy developed by said motor (3) into said electrical energy, said accumulator (6) being operatively also connected to said second transformation means (8) and configured to store said electrical energy.

4. Plant (1) according to any one of the preceding claims, comprising a starting unit (9) operatively connected to said motor (3) and configured to start said motor (3), said accumulator (6) being operatively connected to said unit (9).

5. Plant (1) according to any one of the preceding claims, wherein said first conduit (23) comprises a fluid-dynamic pump (23a) configured to regulate under pressure the inflow of said fluid to said motor (3).

6. Plant (1) according to any one of the preceding claims, wherein said accumulator (6) is a lead-acid accumulator.

7. Plant (1) according to any one of the preceding claims, wherein said apparatus (2) is a boiler.

8. Plant (1) according to any one of the preceding claims, wherein said apparatus (2) comprises an inlet (21) in fluid passage connection with an external network supplying said fluid configured to convey inlet to said apparatus (2) said fluid, an outlet (22) in fluid passage connection with an external environment to expel said fluid.

9. Plant (1) according to the preceding claim, comprising a cooling system (10) operatively connected to said accumulator (6), placed downstream of said outlet (22) and comprising an evaporative cooler at least capable of lowering the temperature of said ejected fluid.

10. Use of a plant (1) for providing power to motive power.
